# EUROPEAN PATENT APPLICATION

(11) **EP 4 068 482 A1**
(43) Date of publication of application: **05.10.2022**
(21) Application number: 22165020.3
(22) Date of filing: 29.03.2022
(51) Int. Cl.: H01M 50/211, H01M 50/249, H01M 50/593, H01M 50/291, H01M 50/293, H01M 50/242

(54) **POWER STORAGE DEVICE**

(30) Priority: 31.03.2021 JP 2021060124
(71) Applicant: TOYOTA JIDOSHA KABUSHIKI KAISHA, Toyota-shi, Aichi-ken, 471-8571 (JP)
(72) Inventor: KATO, Masashi, Toyota-shi, 471-8571 (JP); MATSUMOTO, Mizuho, Toyota-shi, 471-8571 (JP); NAKAYAMA, Hiroyuki, Toyota-shi, 471-8571 (JP); MAEDA, Daiki, Toyota-shi, 471-8571 (JP)
(74) Representative: D Young & Co LLP

(57) **Abstract**

A power storage device (10) includes a power storage module (20), an accommodation case, a first plate portion (28), and a second plate portion (29). The first plate portion (28) is provided with a first protrusion (80) and a second protrusion (81). The first protrusion (80) and the second protrusion (81) are formed to extend in a first intersecting direction intersecting with the stacking direction (H). The second plate portion (29) is provided with a third protrusion (82) and a fourth protrusion (83). The third protrusion (82) and the fourth protrusion (83) are formed to extend in a second intersecting direction intersecting with the stacking direction (H) and the first intersecting direction.

## Description

This nonprovisional application is based on Japanese Patent Application No. 2021-060124 filed on March 31, 2021 with the Japan Patent Office, the entire contents of which are hereby incorporated by reference.

### BACKGROUND

### Field

The present disclosure relates to a power storage device.

### Description of the Background Art

There have conventionally been proposed various types of power storage devices each including a power storage module formed by stacking a plurality of power storage cells. A power storage device disclosed in Japanese Patent Laying-Open No. 2013-229266 includes a power storage module, a pair of bus bar modules, and an accommodation case.

The power storage module includes a plurality of cells stacked in the up-down direction. The accommodation case includes side walls disposed on both sides of the power storage module, and end plates disposed on upper and lower surfaces.

### SUMMARY

When charging and discharging are performed in the power storage device configured as described above, the power storage module deforms so as to expand in the up-down direction.

In this case, a large load may be applied to the accommodation case, so that the accommodation case may deform. Further, in the state in which the power storage device is mounted on a vehicle, the power storage device may vibrate due to traveling of the vehicle.

The present disclosure has been made in view of the above-described problems, and an object of the present disclosure is to provide a power storage device that is capable of reducing a load applied from a power storage module to an accommodation case during charging and discharging to thereby suppress vibration of the power storage device.

A power storage device includes: a power storage module including a plurality of power storage cells stacked in a stacking direction; an accommodation case that accommodates the power storage module; at least one first plate portion disposed in the accommodation case; and at least one second plate portion disposed in the accommodation case. The at least one first plate portion is provided with a first protrusion protruding toward one side in the stacking direction and a second protrusion protruding toward the other side in the stacking direction. The first protrusion and the second protrusion are formed to extend in a first intersecting direction intersecting with the stacking direction. The at least one second plate portion is provided with a third protrusion protruding toward one side in the stacking direction and a fourth protrusion protruding toward the other side in the stacking direction. The third protrusion and the fourth protrusion are formed to extend in a second intersecting direction intersecting with the stacking direction and the first intersecting direction.

According to the power storage device, when the power storage module deforms to expand in the stacking direction due to charging and discharging, the first protrusion, the second protrusion, the third protrusion, and the fourth protrusion deform such that their protruding heights decrease. Thereby, even when the power storage module deforms, the load applied to the accommodation case can be reduced, so that deformation of the accommodation case can be suppressed.

The first plate portion is provided with the first protrusion and the second protrusion each extending in the first intersecting direction, and the second plate portion is provided with the third protrusion and the fourth protrusion each extending in the second intersecting direction. Thus, even when vibration is applied to the power storage device, significant vibration of the power storage device can be suppressed.

The at least one first plate portion or the at least one second plate portion is disposed in one of: an area between the power storage module and the accommodation case; and an area between the power storage cells. The at least one first plate portion and the at least one second plate portion are disposed with a flat plate interposed therebetween.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a power storage device 1 and the like according to the present embodiment.
Fig. 2 is a cross-sectional view taken along a line II-II in Fig. 1.
Fig. 3 is a perspective view schematically showing a power storage module 20, plate portions 28, 29, and the like.
Fig. 4 is a perspective view showing a power storage cell 30.
Fig. 5 is a cross-sectional view showing a part of power storage cell 30.
Fig. 6 is a cross-sectional view showing a plate portion 28.
Fig. 7 is a cross-sectional view showing a flat plate 16 as a reference example.
Fig. 8 is a cross-sectional view showing a plate portion 29.
Fig. 9 is a cross-sectional view showing a flat plate 16.
Fig. 10 is a cross-sectional view taken along a plane extending in a stacking direction H and a long-side direction L.
Fig. 11 is a cross-sectional view showing a power storage device 1A.
Fig. 12 is a cross-sectional view showing a power storage device 1B.
Fig. 13 is a plan view showing a modification of a plate portion.

### DESCRIPTION OF THE PREFERRED EMBODIMENTS

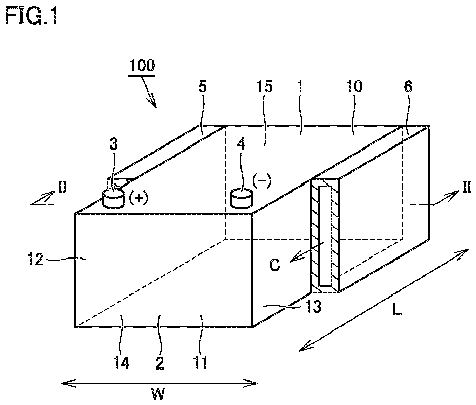

A power storage device according to the present embodiment will be hereinafter described with reference to Figs. 1 to 13. Among the configurations shown in Figs. 1 to 13, the same or substantially the same configurations are denoted by the same reference characters, and the descriptions thereof will not be repeated.

Fig. 1 is a perspective view schematically showing a power storage device 1 and the like according to the present embodiment. A battery pack 100 includes a power storage device 1 and cooling devices 5 and 6. Power storage device 1 includes an accommodation case 2, a positive electrode external terminal 3, and a negative electrode external terminal 4.

Accommodation case 2 is formed in a substantially rectangular parallelepiped shape. Accommodation case 2 includes a top plate 10, a bottom plate 11, side walls 12 and 13, and end walls 14 and 15. Side walls 12 and 13 are arranged in a width direction W, and formed to extend in a long-side direction L. End walls 14 and 15 are arranged in long-side direction L, and formed to extend in width direction W.

Positive electrode external terminal 3 and negative electrode external terminal 4 are provided on the upper surface of top plate 10. Positive electrode external terminal 3 and negative electrode external terminal 4 are spaced apart from each other in width direction W.

Cooling device 5 is disposed on side wall 12, and cooling device 6 is disposed on side wall 13. A coolant C flows through cooling devices 5 and 6. Fig. 1 shows a partial cross-sectional view of cooling devices 5 and 6, each of which is partially not shown.

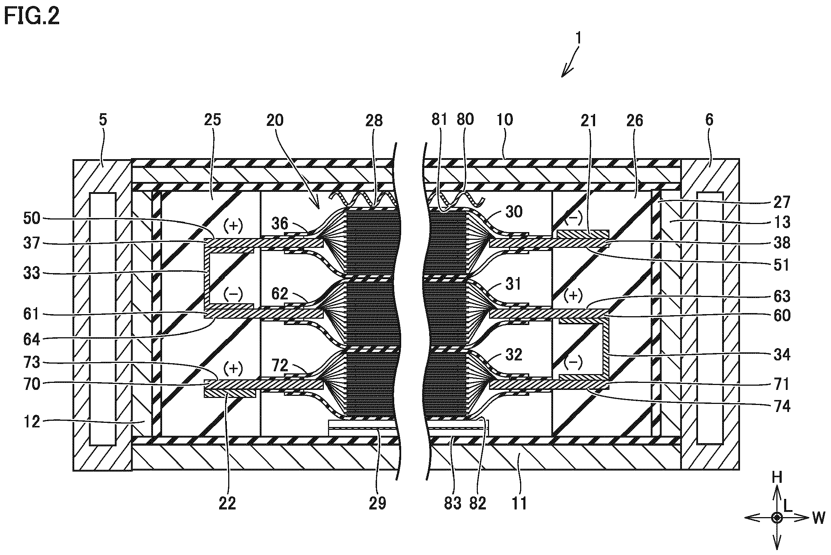

Fig. 2 is a cross-sectional view taken along a line II-II in Fig. 1. Power storage device 1 includes a power storage module 20, bus bars 21 and 22 connected to power storage module 20, insulating members 25 and 26, an insulating film 27, and plate portions 28 and 29.

Plate portion 28 is disposed between power storage module 20 and top plate 10. Plate portion 29 is disposed between power storage module 20 and bottom plate 11.

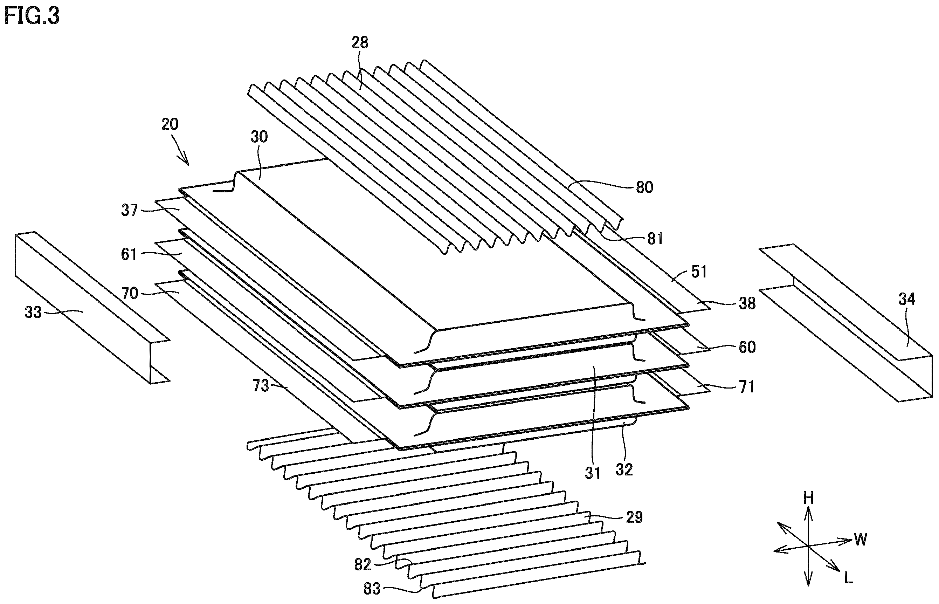

Fig. 3 is a perspective view schematically showing power storage module 20, plate portions 28, 29, and the like. Power storage module 20 includes a plurality of power storage cells 30, 31 and 32 stacked in stacking direction H, and a plurality of connecting members 33 and 34. Long-side direction (the first intersecting direction) L intersects with stacking direction H. Width direction (the second direction) W intersects with long-side direction L and also intersects with stacking direction H. Long-side direction L and width direction W are orthogonal to stacking direction H, and long-side direction L is orthogonal to width direction W.

Since power storage cells 31 and 32 have substantially the same configuration as that of power storage cell 30, power storage cell 30 will be hereinafter specifically described.

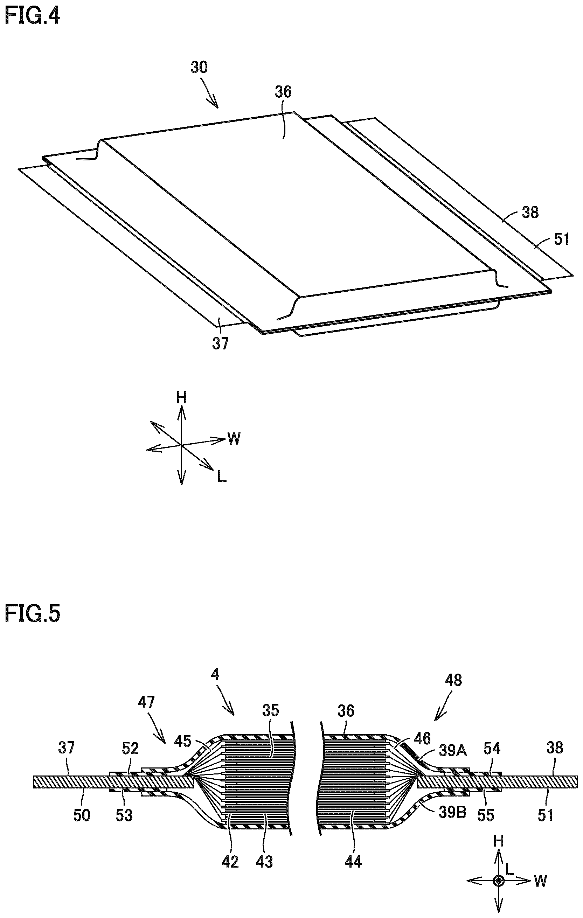

Fig. 4 is a perspective view showing power storage cell 30, and Fig. 5 is a cross-sectional view showing a part of power storage cell 30. Power storage cell 30 includes an electrode assembly 35, an exterior body 36, a positive electrode current collector plate 37, and a negative electrode current collector plate 38.

Exterior body 36 is formed of an aluminum laminate film or the like. Exterior body 36 accommodates electrode assembly 35 and an electrolyte solution (not shown).

Exterior body 36 includes an upper film 39A and a lower film 39B. Upper film 39A is disposed to cover electrode assembly 35 from above while lower film 39B is disposed to cover electrode assembly 35 from below.

Note that the outer peripheral edge of upper film 39A and the outer peripheral edge of lower film 39B are bonded together by an adhesive (not shown).

Electrode assembly 35 is formed in a rectangular parallelepiped shape. Electrode assembly 35 includes a plurality of positive electrode sheets 42, a plurality of separators 43, and a plurality of negative electrode sheets 44 that are stacked in stacking direction H. Separator 43 is disposed between positive electrode sheet 42 and negative electrode sheet 44.

Each positive electrode sheet 42 includes an aluminum foil 45 and a positive electrode composite layer formed on each of the front and rear surfaces of aluminum foil 45. Each negative electrode sheet 44 includes a copper foil 46 and a negative electrode composite layer formed on each of the front and rear surfaces of copper foil 46.

Aluminum foil 45 is provided to extend outside electrode assembly 35 on the side of one side surface 47 of electrode assembly 35, and copper foil 46 is provided to extend outside electrode assembly 35 on the side of the other side surface 48 of electrode assembly 35. Side surfaces 47 and 48 are arranged in width direction W and formed to extend in long-side direction L.

Positive electrode current collector plate 37 is formed of aluminum or the like. Positive electrode current collector plate 37 is disposed on the side surface 47 side, and a plurality of aluminum foils 45 are welded to positive electrode current collector plate 37.

An adhesive 52 is formed on the upper surface of positive electrode current collector plate 37 to bond upper film 39A to positive electrode current collector plate 37. An adhesive 53 is formed on the lower surface of positive electrode current collector plate 37 to bond lower film 39B to positive electrode current collector plate 37. Note that adhesives 52 and 53 extend to the outside of exterior body 36 in width direction W.

Positive electrode current collector plate 37 protrudes on the outside of exterior body 36 and adhesives 52 and 53 in width direction W. Positive electrode current collector plate 37 includes an exposed portion 50 exposed from exterior body 36 and adhesives 52 and 53.

Negative electrode current collector plate 38 is formed of copper or the like. Negative electrode current collector plate 38 is disposed on the side surface 48 side, and a plurality of copper foils 46 are welded to negative electrode current collector plate 38.

An adhesive 54 is formed on the upper surface of negative electrode current collector plate 38 to bond negative electrode current collector plate 38 to upper film 39A. An adhesive 55 is formed on the lower surface of negative electrode current collector plate 38 to bond negative electrode current collector plate 38 to lower film 39B. Note that adhesives 54 and 55 extend to the outside of exterior body 36 in width direction W.

Negative electrode current collector plate 38 protrudes on the outside of exterior body 36 and adhesives 54 and 55 in width direction W. Negative electrode current collector plate 38 includes an exposed portion 51 exposed from exterior body 36 and adhesives 54 and 55.

Referring back to Fig. 2, power storage cell 31 includes a positive electrode current collector plate 60, a negative electrode current collector plate 61, and an exterior body 62. An electrode assembly and an electrolyte solution are accommodated in exterior body 62. Like positive electrode current collector plate 37, positive electrode current collector plate 60 includes an exposed portion 63. Like negative electrode current collector plate 38, negative electrode current collector plate 61 includes an exposed portion 64.

Power storage cell 32 includes a positive electrode current collector plate 70, a negative electrode current collector plate 71, and an exterior body 72. An electrode assembly and an electrolyte solution are accommodated in exterior body 72. Like positive electrode current collector plate 37, positive electrode current collector plate 70 includes an exposed portion 73. Like negative electrode current collector plate 38, negative electrode current collector plate 71 includes an exposed portion 74.

Positive electrode current collector plate 37, negative electrode current collector plate 61, and positive electrode current collector plate 70 are arranged in stacking direction H. Negative electrode current collector plate 38, positive electrode current collector plate 60, and negative electrode current collector plate 71 are arranged in stacking direction H.

Connecting member 33 is disposed to connect exposed portion 50 of positive electrode current collector plate 37 and exposed portion 64 of negative electrode current collector plate 61. Connecting member 34 is disposed to connect exposed portion 63 of positive electrode current collector plate 60 and exposed portion 74 of negative electrode current collector plate 71.

Bus bar 21 is welded to the upper surface of exposed portion 51 of negative electrode current collector plate 38. Bus bar 22 is welded to the lower surface of exposed portion 73 of positive electrode current collector plate 70. Bus bar 21 is connected to negative electrode external terminal 4 shown in Fig. 1. Bus bar 22 is connected to positive electrode external terminal 3.

In Fig. 3, plate portion 28 is provided with a plurality of protrusions 80 and a plurality of protrusions 81. Each protrusion 80 is formed so as to protrude toward one side in stacking direction H. Each protrusion 81 is formed so as to protrude toward the other side in stacking direction H. In the example shown in Fig. 3, each protrusion 80 is formed so as to protrude upward and each protrusion 81 is formed so as to protrude downward.

Protrusions 80 and 81 are formed to extend in long-side direction L. Specifically, each protrusion 80 and each protrusion 81 are formed in plate portion 28 so as to extend from one short side located at one end in long-side direction L to reach the other short side located at the other end.

Protrusions 80 and protrusions 81 are alternately arranged in width direction W. Each protrusion 80 is formed in a curved surface shape protruding toward one side in stacking direction H. Each protrusion 81 is formed in a curved surface shape protruding toward the other side in stacking direction H. In this way, plate portion 28 is formed in a corrugated plate shape.

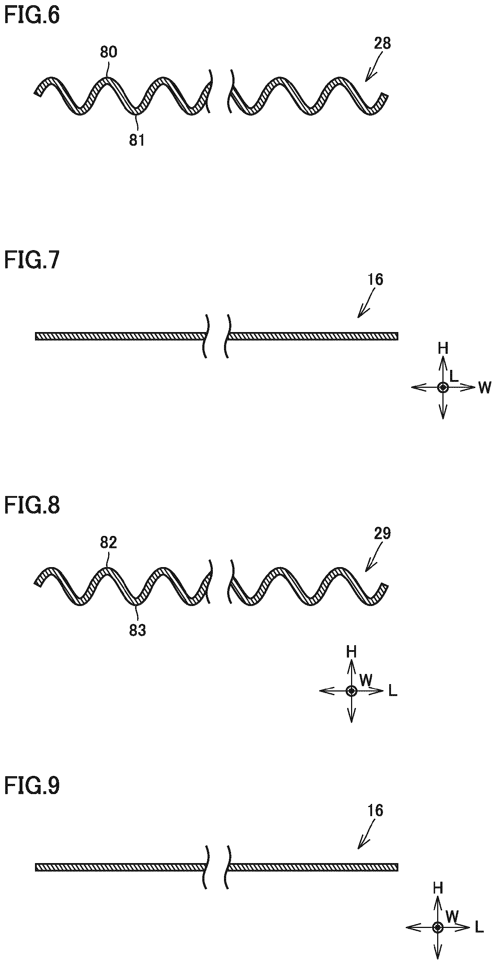

Plate portion 29 is provided with a plurality of protrusions 82 and a plurality of protrusions 83. Each protrusion 82 is formed so as to protrude toward one side in stacking direction H. Each protrusion 83 is formed so as to protrude toward the other side in stacking direction H. In the example shown in Fig. 8, each protrusion 82 is formed so as to protrude upward and each protrusion 83 is formed so as to protrude downward. Protrusions 82 and 83 are formed to extend in width direction W. Protrusions 82 and 83 each are formed so as to extend from one long side located on one end side of plate portion 29 in width direction W to reach the other long side located on the other end side of plate portion 29 in width direction W. Protrusions 82 and protrusions 83 are alternately arranged in long-side direction L. Each protrusion 82 is formed in a curved surface shape so as to bulge upward. Each protrusion 83 is formed in a curved surface shape so as to bulge downward. In this way, plate portion 29 is formed in a corrugated plate shape. Note that plate portions 28 and 29 each are formed of an elastically deformable metal material.

Fig. 6 is a cross-sectional view showing plate portion 28. Fig. 7 is a cross-sectional view showing a flat plate 16 as a reference example. Flat plate 16 and plate portion 28 have the same thickness. Flat plate 16 is formed by extending plate portion 28 in width direction W.

Figs. 6 and 7 each are a cross-sectional view taken along a plane extending in stacking direction H and width direction W. Along the cross section, the moment of inertia of area of plate portion 28 is defined as a moment of inertia of area I1, and the moment of inertia of area of flat plate 16 is defined as a moment of inertia of area 12. In this case, moment of inertia of area I1 is greater than moment of inertia of area 12.

Thus, for example, it is assumed that a load is applied to one ends of plate portion 28 and flat plate 16 in long-side direction L in the state where the other ends thereof in long-side direction L are fixed. In this case, plate portion 28 is less likely to bend and exhibits high rigidity since moment of inertia of area I1 of plate portion 28 is greater than moment of inertia of area 12 of flat plate 16.

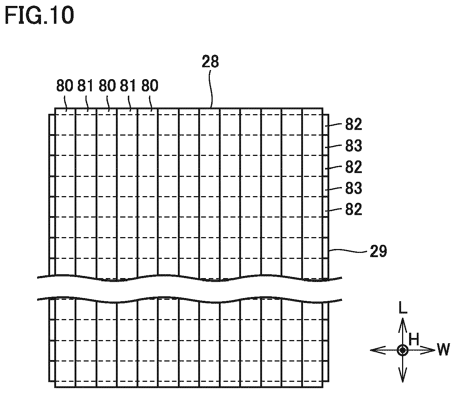

Fig. 8 is a cross-sectional view showing plate portion 29. Fig. 9 is a cross-sectional view showing flat plate 16. Figs. 9 and 10 each are a cross-sectional view taken along a plane extending in stacking direction H and long-side direction L.

Along this plane, the moment of inertia of area of plate portion 29 is defined as a moment of inertia of area 13, and the moment of inertia of area of flat plate 16 is defined as a moment of inertia of area 14. In this case, moment of inertia of area 13 is greater than moment of inertia of area 14.

Thus, it is assumed that a load is applied to one ends of plate portion 29 and flat plate 16 in width direction W in the state where the other ends thereof in width direction W are fixed. In this case, plate portion 29 is less likely to bend and exhibits higher rigidity than flat plate 16 since moment of inertia of area 13 is greater than moment of inertia of area 14.

Fig. 10 is a schematic plan view of plate portions 28 and 29 as seen from a position away from plate portions 28 and 29 in stacking direction H. Protrusions 80 and 81 are orthogonal to protrusions 82 and 83.

It is not indispensable that protrusions 80 and 81 are orthogonal to protrusions 82 and 83 in a plan view, but plate portions 28 and 29 may be arranged such that protrusions 80 and 81 merely intersect with protrusions 82 and 83.

In Fig. 2, insulating member 25 is provided so as to extend from side wall 12 to reach power storage module 20. Exposed portion 50 of positive electrode current collector plate 37, exposed portion 64 of negative electrode current collector plate 61, connecting member 33, and at least a part of bus bar 22 are located inside insulating member 25.

Insulating member 26 is provided so as to extend from side wall 13 to reach power storage module 20. At least a part of bus bar 21, exposed portion 51 of negative electrode current collector plate 38, exposed portion 63 of positive electrode current collector plate 60, and exposed portion 74 of negative electrode current collector plate 71 are located inside insulating member 26.

Power storage device 1 configured as described above is mounted, for example, on an electrically powered vehicle. Power storage device 1 repeats charging and discharging.

Upon charging and discharging of power storage device 1, power storage module 20 deforms so as to expand in stacking direction H. At this time, protrusions 80 and 81 in plate portion 28 deform such that their protruding heights decrease, and plate portion 28 deforms so as to extend in width direction W.

Protrusions 82 and 83 in plate portion 29 deform such that their protruding heights decrease, and plate portion 29 deforms so as to extend in long-side direction L.

Deformation of plate portions 28 and 29 in this way allows power storage module 20 to deform so as to expand in stacking direction H. Thereby, even when power storage module 20 deforms so as to expand in stacking direction H, an increase in load applied to accommodation case 2 can be suppressed, so that deformation of accommodation case 2 can be suppressed.

When the vehicle travels in the state where battery pack 100 is mounted on the vehicle, vibration may be applied to power storage device 1.

In this case, for example, power storage device 1 may vibrate in the state where both ends of power storage device 1 in long-side direction L act as fixed ends and a central portion of power storage device 1 in long-side direction L acts as an antinode. When power storage device 1 vibrates in this way, plate portion 28 is less likely to bend and exhibits high rigidity. Thus, significant vibration of power storage device 1 can be suppressed.

Further, for example, power storage device 1 may vibrate in the state where both ends of power storage device 1 in width direction W act as fixed ends and a central portion of power storage device 1 in width direction L acts as an antinode. When power storage device 1 vibrates in this way, plate portion 29 is less likely to bend and exhibits high rigidity. Thus, significant vibration of power storage device 1 can be suppressed.

During charging and discharging of power storage device 1, the temperature of power storage module 20 rises. At this time, insulating member 25 is formed so as to cover exposed portions 50, 64, and 73, connecting member 33, and at least a part of bus bar 22. Since exposed portions 50, 64, 73, connecting member 33, and bus bar 22 each are formed of a metal material, the heat in power storage module 20 is excellently transmitted to insulating member 25 for dissipation. The heat transmitted to insulating member 25 is transmitted through side wall 12 to cooling device 5 for dissipation.

Insulating member 26 is formed so as to cover at least a part of bus bar 21, exposed portions 51, 63, 74, and connecting member 34. Since bus bar 21, exposed portions 51, 63, 74, and connecting member 34 each are formed of a metal material, the heat in power storage module 20 is excellently transmitted to insulating member 26 for dissipation. The heat transmitted to insulating member 26 is transmitted through side wall 13 to cooling device 6 for dissipation. Thus, power storage module 20 can be excellently cooled.

### (Second Embodiment)

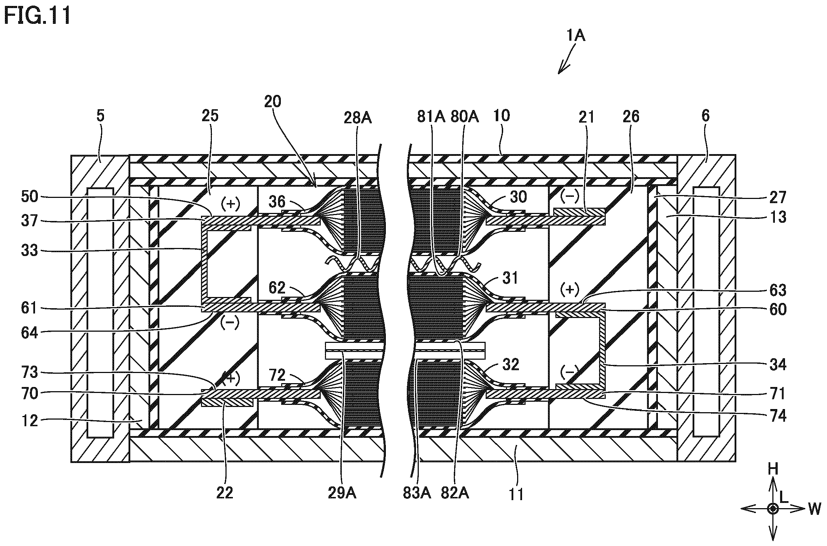

A power storage device 1A according to the second embodiment will be hereinafter described with reference to Fig. 11 and the like. Power storage device 1A includes plate portions 28A and 29A.

Fig. 11 is a cross-sectional view showing power storage device 1A. Power storage device 1A has substantially the same configuration as that of power storage device 1 except for the configurations of plate portions 28A and 29A. Plate portion 28A is disposed between power storage cells 30 and 31, and plate portion 29A is disposed between power storage cells 31 and 32.

Plate portion 28A is configured similarly to plate portion 28, and provided with protrusions 80A and 81A each extending in long-side direction L.

Plate portion 29A is configured similarly to plate portion 29, and provided with protrusions 82A and 83A each extending in width direction W. Plate portions 28A and 29A each are also formed of an elastically deformable metal material.

Also in power storage device 1A, when power storage module 20 deforms so as to expand in stacking direction H due to charging and discharging, protrusions 80A and 81A and protrusions 82A and 83A deform. Thereby, even when power storage module 20 deforms to expand, the load applied to accommodation case 2 can be reduced. Further, vibration of power storage device 1A can also be suppressed.

Further, plate portion 28A may be formed such that the end portions thereof in width direction W reach the respective insulating members 25 and 26. Plate portion 29A may also be formed such that the end portions thereof in width direction W reach the respective insulating members 25 and 26.

By the configuration as described above, the heat generated by power storage module 20 due to charging and discharging can be transmitted through plate portions 28A, 29A, insulating members 25, 26, and side walls 12 and 13 to cooling devices 5 and 6 for dissipation.

### (Third Embodiment)

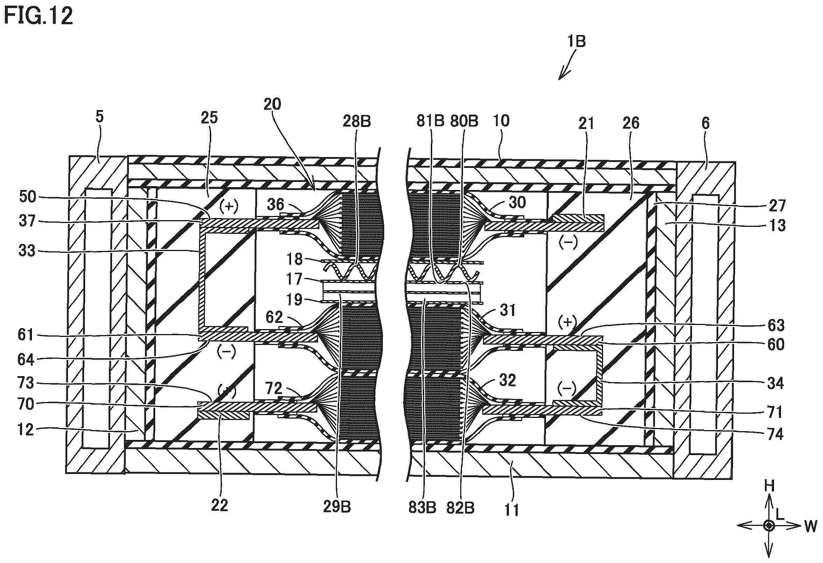

A power storage device 1B according to the present third embodiment will be hereinafter described with reference to Fig. 12. Power storage device 1B includes plate portions 28B and 29B and flat plates 17, 18, and 19. Power storage device 1B has substantially the same configuration as that of power storage device 1 except for the configurations of plate portions 28B and 29B and flat plates 17, 18, and 19.

Fig. 12 is a cross-sectional view showing power storage device 1B. Plate portions 28B and 29B and flat plates 17, 18, and 19 are disposed between power storage cells 30 and 31. Flat plate 17 is disposed between plate portions 28B and 29B. Flat plate 18 is disposed between power storage cell 30 and plate portion 28B, and flat plate 19 is disposed between power storage cell 31 and plate portion 29B.

Similarly to plate portion 28, plate portion 28B is provided with protrusions 80B and 81B each extending in long-side direction L. Similarly to plate portion 29, plate portion 29B is provided with protrusions 82B and 83B each extending in width direction W. Plate portions 28B and 29B each are formed of an elastically deformable metal material.

Flat plate 17 is disposed between plate portions 28B and 29B. Flat plate 17 is formed of a metal material. In power storage device 1B, when power storage module 20 deforms so as to expand, protrusions 80B, 81B, 82B, and 83B deform. Then, plate portion 28B deforms so as to extend in width direction W. At this time, the portion of contact between each protrusion 81B of plate portion 28B and flat plate 17 is also displaced in width direction W.

Since flat plate 17 is formed in a flat plate shape, only a small friction occurs between plate portion 28B and flat plate 17, and thus, plate portion 28B can favorably deform. Similarly, also in plate portion 29B, only a small friction occurs between each protrusion 82B and flat plate 17, and thus, plate portion 29B can favorably deform.

Protrusions 80B of plate portion 28B are in contact with flat plate 18 while protrusions 83B of plate portion 29B are in contact with flat plate 19. The friction between each protrusion 80B and flat plate 18 is small, and the friction between each protrusion 83B and flat plate 19 is also small. Thus, plate portions 28B and 29B can favorably deform.

Note that plate portion 28B is provided with protrusions 80B and 81B and plate portion 29B is provided with protrusions 82B and 83B. Thus, even when power storage module 20 deforms to expand due to charging and discharging, application of a large load to power storage module 20 can be suppressed. Further, even when vibration is applied to power storage device 1, significant vibration of power storage device 1 can be suppressed.

In the third embodiment, plate portions 28B, 29B and flat plate 17 are disposed between power storage cells 30 and 31, but may be disposed between power storage cells 31 and 32.

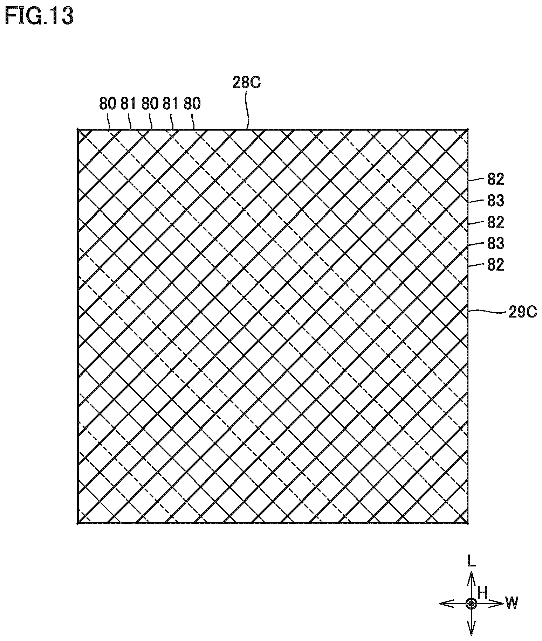

Fig. 13 is a plan view showing a modification of the plate portion. Fig. 13 shows plate portions 28C and 29C in a plan view. Protrusions 80 and 81 provided in plate portion 28C are formed so as to extend in an oblique direction. Specifically, protrusions 80 and 81 are formed to be inclined with respect to long-side direction L and to be inclined with respect to width direction W. Protrusions 82 and 83 provided in plate portion 29C are also formed to extend in an oblique direction. Protrusions 80 and 81 are orthogonal to protrusions 82 and 83.

Further, plate portions 28B, 29B and flat plate 17 may be disposed between accommodation case 2 and power storage module 20. In the above description about the example of the power storage device, an electrolyte solution is accommodated in each power storage cell, but the present disclosure can also be applicable to an example in which a solid-state battery is employed as each power storage cell.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device comprising:
a power storage module (20) including a plurality of power storage cells (30, 31, 32) stacked in a stacking direction (H);
an accommodation case (2) that accommodates the power storage module (20);
at least one first plate portion (28) disposed in the accommodation case (2); and
at least one second plate portion (29) disposed in the accommodation case (2), wherein
the at least one first plate portion (28) is provided with
a first protrusion (80) protruding toward one side in the stacking direction (H), and
a second protrusion (81) protruding toward the other side in the stacking direction (H),
the first protrusion (80) and the second protrusion (81) are formed to extend in a first intersecting direction intersecting with the stacking direction (H),
the at least one second plate portion (29) is provided with
a third protrusion (82) protruding toward one side in the stacking direction (H), and
a fourth protrusion (83) protruding toward the other side in the stacking direction (H), and
the third protrusion (82) and the fourth protrusion (83) are formed to extend in a second intersecting direction intersecting with the stacking direction (H) and the first intersecting direction.

2. The power storage device according to claim 1, wherein
the at least one first plate portion (28) or the at least one second plate portion (29) is disposed in one of:
an area between the power storage module (20) and the accommodation case (2); and
an area between the power storage cells (30, 31, 32).

3. The power storage device according to claim 1 or 2, wherein the at least one first plate portion (28) and the at least one second plate portion (29) are disposed with a flat plate interposed therebetween.
